# EUROPÄISCHE PATENTANMELDUNG

(11) **EP 2 385 273 A1**
(43) Veröffentlichungstag der Anmeldung: **09.11.2011**
(21) Anmeldenummer: 10450071.5
(22) Anmeldetag: 03.05.2010
(51) Int. Cl.: F16J 9/06, F16J 9/20

(54) **Kolbenring**

(71) Anmelder: Mahle König Kommanditgesellschaft GmbH & Co, 6830 Rankweil (AT)
(72) Erfinder: Dipl. Ing. Langer, Karlheinz, 2393 Sittendorf bei Wien (AT); Dipl. Ing. Ulrich, Reiner, 71287 Weissach (AT); Ing. Geser, Wolfgang, 6840 Götzis (AT)
(74) Vertreter: Wildhack, Andreas

(57) **Zusammenfassung**

Kolbenring (100) mit einem oberen Teilring (1) mit oberer Ringfläche (11) und einem unteren Teilring (2) mit unterer Ringfläche (21) und einer zwischen den Teilringen angeordneten, dieselben radial nach außen (A) hin federkraftbeaufschlagenden Ringfeder (3), dadurch gekennzeichnet, dass jeder der beiden Teilringe (1, 2) auf seiner dem jeweils anderen Teilring zugekehrten Kreisringfläche (12, 22) eine Mehrzahl von durch Vertiefungsbereiche (17, 27) voneinander getrennt angeordneten Erhebungen (16, 26) mit zu den Ringflächen (11, 12) parallelen, eben-flachen oder abfallenden Plateauflächen (161, 261) aufweist, welche zur Ringachse (Ar) des jeweiligen Teilringes (1, 2) jeweils eine von den Plateauflächen - zur Ringachse (A) parallel ausgerichtet - ausgehende und zu dieser Ringachse (Ar) - jeweils parallel zur oberen und zur unteren Ringfläche - auslaufende viertelkreis-förmigen Querschnitt aufweisende Innenflankeneinbuchtung (14, 24) aufweisen, wobei der Radius rv derselben um 1 bis 10% größer ist, als der Außenradius (rs) des Kreis-Querschnitts der durch die Einbuchtungen der gemeinsam den Kolbenring (100) bildenden Teilringe gebildete halbkreisförmigen Querschnitt aufweisenden, gemeinsamen Innenflankeneinbuchtung (14, 24) angeordneten Schlauchfeder (3).

## Beschreibung

Die Erfindung betrifft einen in einer Umfangsrille des Arbeitskolbens einer Kolbenmaschine unterzubringenden dreiteiligen Kolbenring gemäß dem Oberbegriff des Anspruches 1.

Aus dem Stand der Technik sind die verschiedensten Vorschläge für Kolbenringe und deren Ausführungsformen bekannt geworden. So umfasst ein einfacher derartiger Ring zwei offene flache Teilringe und eine zwischen denselben anzuordnende bzw. angeordnete, etwa Rechteckquerschnitt aufweisenden, etwa zickzackförmige, ebenfalls offene Ringfeder mit zentralen Öffnungen im Ringkörper, in welche rechts und links der Ringfeder-Öffnung ein dünner, ebenfalls Kreisringverlauf aufweisender Führungsdraht eingezogen ist.

Jeder der zur Ring- bzw. Ringfeder-Achse hin, also radial nach innen hin angeordnete, etwa trapezartigen Zickzack-Abschnitte der Ringfeder weist jeweils eine nach oben und nach unten ragende, geringere Höhe als die Dicke der flachen Kolbenringe aufweisende, Zunge auf. Diese Zungen liegen jeweils an der zur Ringachse hin radial nach innen gerichteten Innenflankenfläche der beiden ober- und unterhalb der Ringfeder angeordneten Teilringe an und sorgen so für eine radial nach außen hin wirksame Kraftbeaufschlagung der beiden Teilringe durch die Ringfeder.

Wenn auch die offenen Teilringe dieses bekannten Kolbenrings als Flachringe relativ einfach zu fertigen sind, so ist die Fertigung der die Teilringe radial nach außen hin kraftbeaufschlagenden Ringfeder, die zwischen den beiden Teilringen angeordnet ist, fertigungstechnisch ziemlich kompliziert.

Die vorliegende Erfindung hat sich nun das Ziel gesetzt, einen auch hinsichtlich der Schmierung besonders effektiven Kolbenring zu schaffen, bei welchem in jeder Situation dafür Sorge getragen ist, dass die Teilringe an ihrer Peripherie besonders dicht an der Innenwandung eines Arbeits-Zylinders, innerhalb dessen sich der Kolben oszillierend aufund abbewegt, anliegen, wobei jeder der Kolbenringe individuell dichtend an der Zylinderwand anliegen soll und somit jeweils für sich individuell optimal für ein sattes Anliegen an der Zylinderwand sorgt. Darüber hinaus bestand das Bestreben dahin, dass die Ringfeder möglichst einfach gebaut sein soll und der angestrebten vollen und kontinuierlichen Schmierung an keiner Stelle des Federverlaufs ein besonderer Widerstand entgegengesetzt wird.

Gegenstand der Erfindung ist somit ein, wie eingangs erwähnter, dreiteiliger Kolbenring gemäß dem Oberbegriff des Anspruches 1, welcher die im Kennzeichen dieses Anspruchs genannten Merkmale aufweist.

Durch die Kombination von an den Innenflächen der beiden Teilringe gemeinsam gebildeter, etwa halbkreisförmigen Querschnitt aufweisender, umlaufender, radial zur Ringachse hin gerichteter innenseitiger Einbuchtungsrinne bzw. Innenflanken-Einbuchtung an den beiden jeweils einander zugekehrt angeordneten Erhebungen der beiden Teilringe mit dem etwas geringeren Schlauchfederquerschnittsradius wird nicht nur ein sattes Anliegen der Teilring-Außenflanken an der Zylinderwand erreicht, sondern auch eine Art in Richtung der Ringachse eintretendes Auseinanderdrängen der einander zugekehrten Plateauflächen der Erhebungen der Teilringe und damit auch ein tatsächlich sanftes, nach aufwärts und seitlich gerichtetes Anliegen der jeweils oberen und unteren Ringflächen an die jeweilige Seitenwandung der Kolbenring-Aufnahmenuten des Arbeitskolbens.

Dieser Effekt des Anpressens der, vorzugsweise aus Gussmaterial gebildeten, Kolbenringe kann gesteigert werden, wenn insbesondere jede der beiden Viertelkreis-Einbuchtungen in ihrem mittleren Bereich einen den Viertelkreisverlauf unterbrechende geradlinige Querschnittslinie aufweisenden Abschnitt aufweist, wenn also dort innerhalb der zweidimensional gekrümmten Viertelflächen ein kurzes Stück einer (nur einfach gekrümmten) Kegelfläche angeordnet ist, wie dem Anspruch 2 zu entnehmen.

Jeder der beiden Teilringe weist - den unterschiedlichen Belastungen des oszillierend bewegten Kolbens entsprechende - umlaufende nichtsymmetrische Nasen bzw. Vorsprünge auf, welche mittig beide nach aufwärts und schräg radial nach außen gerichtete Schrägflächen, also konkret kurze Kegel(stumpf)-Mantelflächen aufweisen, wozu auf die Ansprüche 3 und 4 hingewiesen sei.

Der Anspruch 5 enthält eine Angabe zur bevorzugten Winkelneigung der genannten Schrägflächen an den beiden außenseitig umlaufenden Nasen bzw. Vorsprüngen der Teilringe.

Üblicherweise liegen die beiden Teilringe im Betrieb mit den Plateauflächen ihrer Erhebungen flächig aneinander, wie dies im Anspruch 6 angegeben ist.

Es kann aber auch sein, dass sich im Betrieb durch den radial nach außen wirkenden Druck der Schlauchfeder auf die beiden durch die oben genannte Kegelfläche mittig unterbrochenen Viertelkreis-Einbuchtungen die genannten Plateauflächen der Erhebungen um einen geringen Betrag voneinander abheben, wozu auf Anspruch 7 verwiesen sei.

Es hat sich, siehe Anspruch 8, gezeigt, dass eine besonders gleichmäßige Schmiermittel-Verteilung erzielt wird, wenn die Schlauchfeder gegen ihre einander gegenüberstehenden, zur Feder-Öffnung gerichteten Enden hin beidseitig eine engere Spiralwicklung aufweist als in deren Mittenbereich.

Was die Form der Erhebungen und der zwischen denselben angeordneten, ebenen Boden aufweisenden Vertiefungen auf den beiden einander zugekehrten Flächen der Teilringe betrifft, so sind für beide etwa flachtrapezoide Formen günstig, wobei die längeren Trapez-Parallelseiten der Erhebungen radial nach innen zur Ringachse hin angeordnet sind und die längeren Trapez-Parallelseiten der zwischen den Erhebungen angeordneten Vertiefungen zwischen denselben radial nach außen weisen, wie das im Anspruch 9 niedergelegt ist.

Gemäß Anspruch 1 0 ist vorgesehen, dass die trapezförmigen Erhebungen eine größere Flächenausdehnung aufweisen als die Vertiefungen und dass somit bei einer gegenseitigen Verdrehung der Teilringe gegeneinander der Abstand zwischen den Teilringen gewahrt bleibt.

Anhand der Zeichnung wird die Erfindung näher erläutert:
Es zeigen dort die Fig. 1 bis 4 verschiedene Ansichten eines dreiteiligen Kolbenrings gemäß dem Stand der Technik, die Fig. 5 bis 10 verschiedene Ansichten des oberen und des unteren der beiden Teilringe des Kolbenringes gemäß der Erfindung sowie Details derselben und die Fig. 11 bis 13 die zum gesamten Kolbenring vereinigten Teilringe mit der zwischen denselben angeordneten Schlauchfeder.

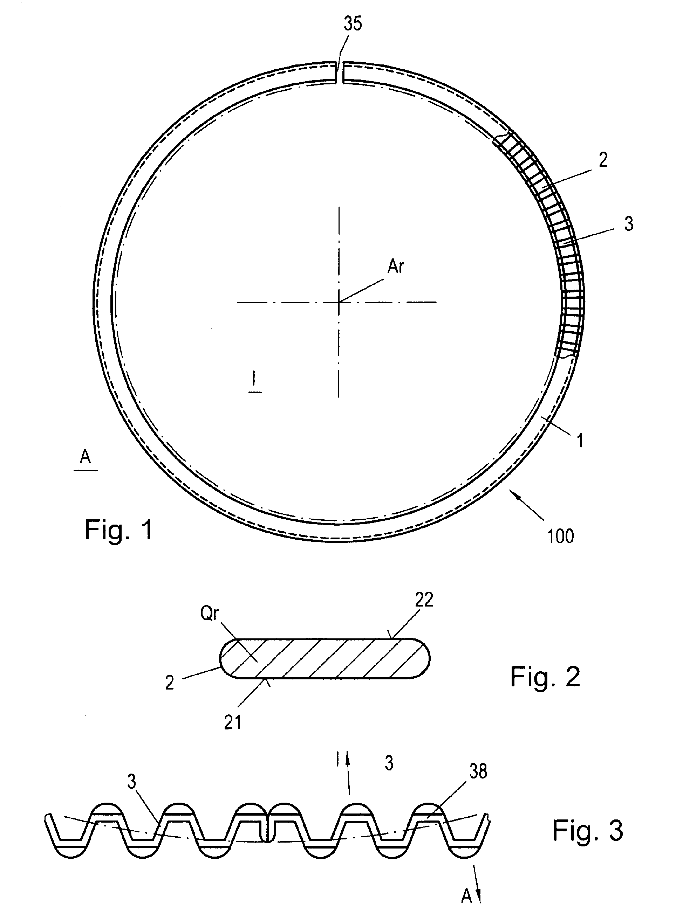

Die Fig. 1 zeigt einen bisher bekannten dreiteiligen Kolbenring 100 in einer Ansicht von oben, wobei hier praktisch der obere Teilring 1 und die darunter angeordnete, etwa einen Zickzackverlauf von aneinandergereihten Trapezen aufweisende Ring-Expansionsfeder 3 und der darunter angeordnete Teilring 2 erkennbar sind. Zu erkennen ist auch der hier sehr geringe Öffnungs-Spalt 35. Eingezeichnet ist dort weiters die Außenlage A und die Innenlage I sowie die für alle Teilringe 1, 2 und die Ringfeder 3 geltende Ringachse Ar.

Die Fig. 2 zeigt den flachrechteckigen Querschnitt Qr durch einen der untereinander gleiche Größe, Querschnittsform und Dimension aufweisenden beiden Teilringe 2 mit seinen nach oben zur Ringfeder bzw. zum jeweils anderen Teilring hinweisenden Innenfläche 22 und der unteren Ringfläche 21 und sie zeigt, wie der Teilring 2 auf seinen radial nach innen und außen gerichteten Ringflanken gerundete Flankenflächen aufweist.

Die Fig. 3 zeigt in einer Draufsicht ein Teilstück der zwischen den Teilringen 1, 2 angeordneten, ringförmigen Expanderfeder 3 mit den durchgehend aneinandergereihten, abwechselnd übliche und verkehrte Flach-Trapezformen aufweisenden Verlauf, wobei hier die radial nach innen I weisenden flachen Trapezseiten nach oben und nach unten den Federkörper 3 überragende Federkraft-Übertragungsvorsprünge 38 aufweist, welche für den radialen Druck der Teilringe 1, 2 radial nach außen hin Sorge tragen.

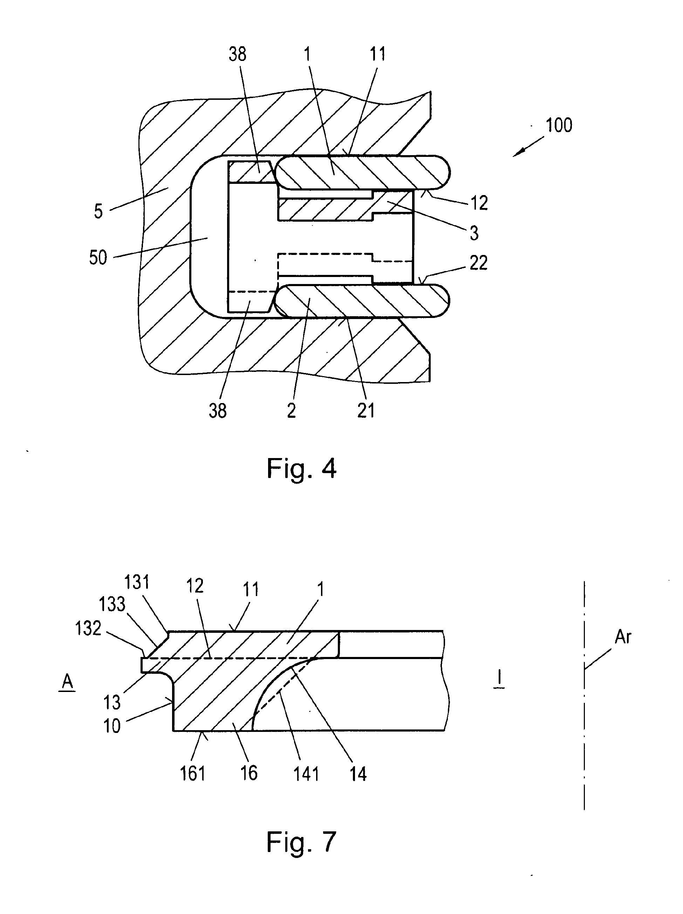

Die Fig. 4 zeigt die Ansicht des betriebsbereit angeordneten, dem Stand der Technik angehörenden Kolbenrings 100 mit den beiden Teilringen 1 und 2 mit oberer und unterer Ringfläche 11 und 21 und den beiden einander zugekehrten Ringflächen 12, 22 und der im Zwischenraum zwischen denselben angeordneten, im wesentlich etwa rechteckigen Querschnitt aufweisenden Ringfeder 3, welche zur Ringachse Ar hin hier einen der nach oben hin ragenden Expansionsvorsprünge 38 aufweist, mit welchen der obere 1 der beiden Teilringe 1, 2 radial nach außen gedrückt wird. Zu sehen ist dort weiters nicht ein Schnitt, sondern nur die Ansicht eines der unteren Expansionsvorsprünge 38, mit welchen die Ringfeder 3 mit ihrer Kraft auf den unteren Teilring 2 wirkt und denselben rundum radial nach außen drückt. Sichtbar ist aus dieser Figur noch weiters die Ringnut 50 eines Arbeitskolbens 5, in welcher der offene dreiteilige Kolbenring 100 eingelegt ist.

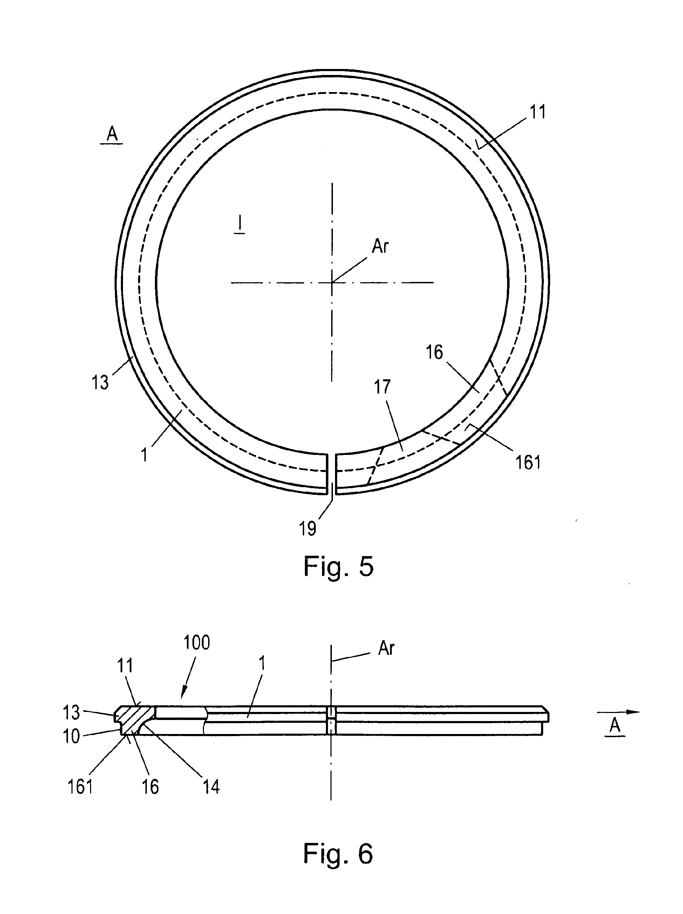

Die Fig. 5 zeigt - bei sonst gleichbleibenden Bezugszeichenbedeutungen - den oberen Teilring 1 des erfindungsgemäßen Kolbenrings 100 in einer Draufsicht mit seiner Ringöffnung 19 und seiner oberen Ringfläche 11. Angedeutet sind dort weiters die flachtrapez-förmigen Erhebungen 16 auf dessen zum unteren Teilring hin weisenden Fläche und den dieselben nach oben hin abschließenden Plateauflächen 161. Zwischen diesen Erhebungen 16 sind ebene, ebenfalls Trapezform aufweisende Vertiefungen 17 angeordnet, welche kleinere Dimension aufweisen als die Erhebungen 16.

Sie zeigen weiters den nach außen weisenden, umlaufenden Vorsprung 13.

Die Fig. 6 zeigt - bei sonst gleich bleibenden Bezugszeichenbedeutungen - diesen Teilring 1 in einer Schnittansicht, wobei der Schnitt auf der linken Seite der Fig. 6 durch eine der Erhebungen 16 mit Plateaufläche 161 gelegt ist. Es ist dort zu erkennen, wie von der Außenflankenfläche 10 des Teilringes 1 ein abgeschrägter umlaufender Vorsprung 13 angeordnet ist. Radial zur Ringachse Ar hin ist innenseitig eine von der Plateaufläche 161 der Erhebung 16 im wesentlichen ringachsenparallel senkrecht aufwärts beginnender und zur Achse Ar hin zur oberen Ringfläche parallel auslaufende Viertelkreis-Einbuchtung 14 angeordnet.

In der Fig. 7 ist - bei sonst gleichbleibenden Bezugszeichenbedeutungen - der durch die Erhebung 16 des Teilringes 1 gelegte Schnitt in vergrößertem Maßstab gezeigt: Hier ist ganz deutlich die Querschnittsform des von dem Teilring 1 radial nach außen ragenden umlaufenden Vorsprungs 13 zu entnehmen, welcher an der oberen Teilringfläche 11 mit einer kleinen Kante 131 beginnend, in eine kurze Schräg-, also Kegelstumpffläche 132 übergeht, die dann nach unten hin wieder in einer kleinen Kante 131 endet.

Sehr gut ist aus dieser Figur die am an der Innenflanke des Teilrings 1, also tatsächlich an den Erhebungen 26 die umlaufende Viertelkreis-Einbuchtung 14 zu erkennen, die letztlich leicht abgerundet an der Innenflanke des Teilrings 1 endet. Eingezeichnet ist dort noch eine mögliche Kegelfläche 141 im Mittelbereich der Viertelkreis-Einbuchtung 14.

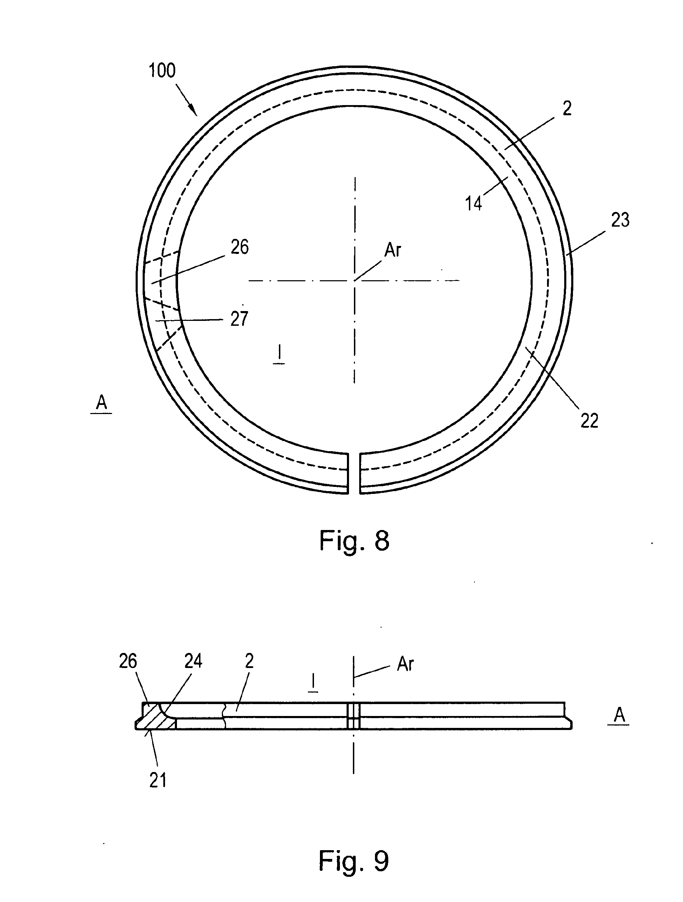

Die Fig. 8 bis 10 zeigen - bei sonst gleichbleibenden Bezugszeichenbedeutungen - ganz analoge Ansichten des an sich sehr ähnlich gebauten, unteren Teilrings 2 mit unterer, vorzugsweise geschliffener, Ringfläche 21 und den ebenfalls mit nach aufwärts weisenden, mit Plateauflächen 261 ausgebildeten, in gleicher Weise und in gleicher Höhe und Größe auf der Fläche 22 angeordneten flach-trapezförmigen Erhebungen 26 und den dazwischenliegenden kleinere Dimension aufweisenden trapezförmigen Vertiefungen 27.

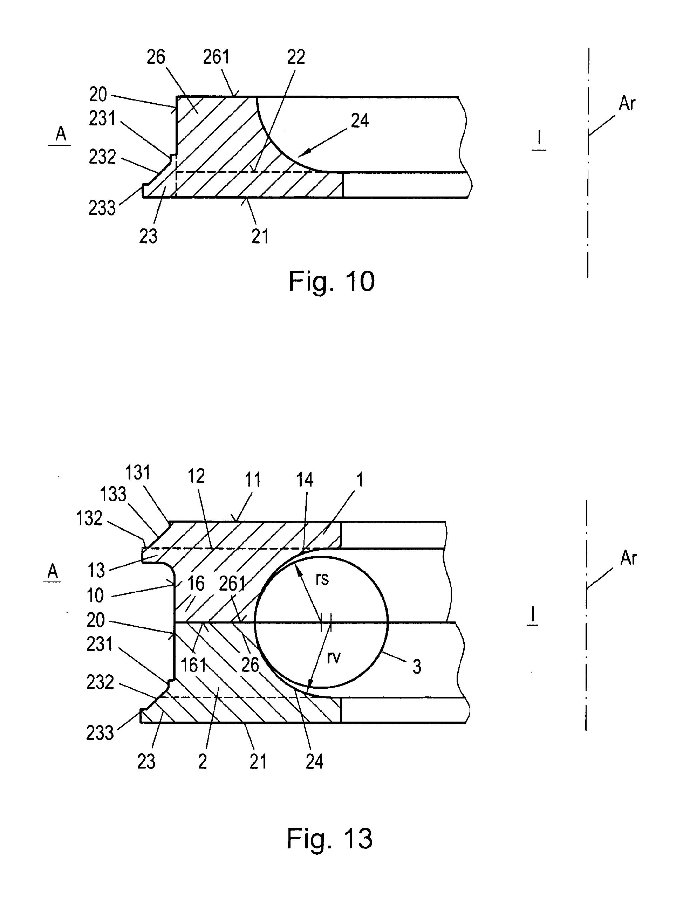

Sehr gut ist dort insbesondere aus Fig. 10 zu ersehen, wie die untere Außenkante des unteren Teilrings 2 mit einem umlaufenden Vorsprung 23 ausgebildet ist, der an die untere Ringfläche 21 mit einer kleinen Kante 233 beginnend, in eine nach außen, oben gerichtete Schrägfläche 232 übergeht, welche ihrerseits nochmals in eine etwas vorspringende Kante 133 übergeht, von wo aus ein Rücksprung zur Außenflankenfläche 20 des Teilrings 2 erfolgt.

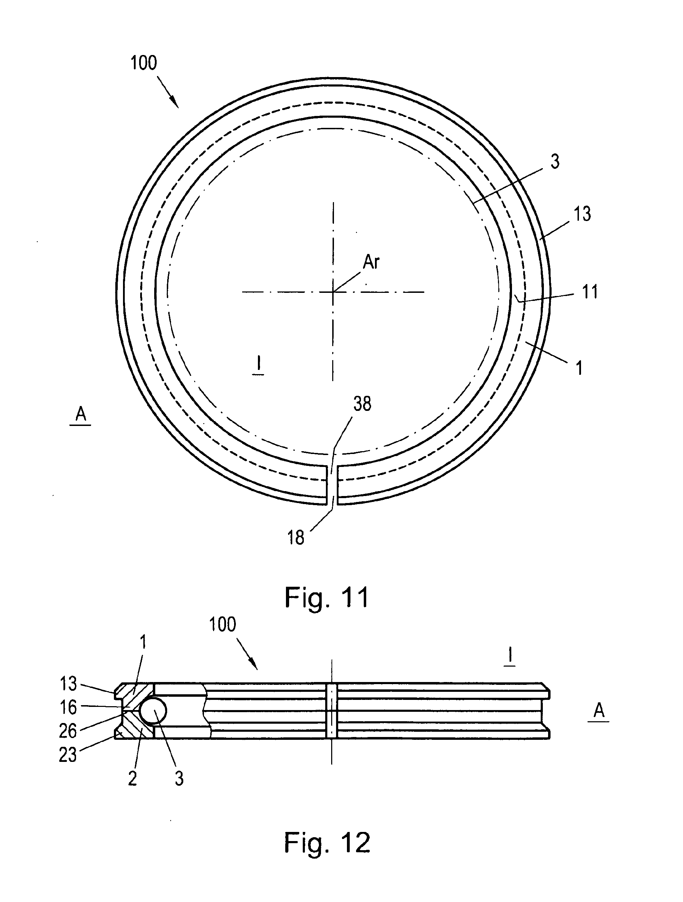

In der Fig. 12 ist radial innenseitig eine senkrecht von der Ringfläche 22 bzw. von einer der dort in gleicher Weise ausgebildeten Erhebungen 16 bzw. deren Fläche 261 eine einen viertelkreisförmigen Verlauf aufweisende und zur Ring-Achse Ar hin gerichtete zur unteren Ringfläche 21 parallel auslaufende Innenflächen-Einbuchtung 24 vorgesehen.

Schließlich zeigen die Fig. 11 bis 13 den gesamten, aus dem oben beschriebenen oberen und dem unteren Teilring 1, 2 zusammengesetzten Kolbenring 100, wobei hier die Plateauflächen 161, 261 der flachtrapezförmigen Erhebungen 16, 26 flächig aneinander liegen und radial nach innen hin eine aus den beiden Viertelkreis-Querschnitt aufweisenden Innenflanken-Einbuchtungen 14, 24 insgesamt gebildete, im wesentlichen etwa halbkreisförmige umlaufende Einbuchtung 1424 gebildet ist, in welche eine einfache, ebenfalls an einer Stelle offene Ring- bzw. Schlauchfeder 3 mit einem Radius rs des Federkörpers, der um 2 bis 10 % kleiner ist als der Radius rv der Viertelkreis-Einbuchtungen 14, 24 an den Innenflanken der Erhebungen 16 und 26 der beiden Teilringe 1 und 2.

## Patentansprüche

1. Kolbenring (100) mit drei offenen, im wesentlichen kreisringartigen Bauteilen, nämlich mit einem oberen Teilring (1) mit nach oben gerichteter, flachebener, oberer Ringfläche (11) und einem unteren Teilring (2) mit nach unten gerichteter, flachebener, unterer Ringfläche (21) und einer zwischen den beiden Teilringen (1, 2) angeordneten, dieselben radial nach außen (A) hin federkraft-beaufschlagenden, im Stoßbereich (31) einen dünnen drahtartigen Stift eingezogen enthaltenden Ring- oder Schlauchfeder (3), **dadurch gekennzeichnet, dass** jeder der beiden Teilringe (1, 2) auf seiner dem jeweils anderen Teilring (2, 1) zugekehrten Kreisring-Fläche (12, 22) eine Mehrzahl von, vorzugsweise in gleichen Abständen zueinander und durch Vertiefungsbereiche (17, 27) voneinander getrennt angeordneten Erhebungen (16, 26) mit zu den Ringflächen (11, 12) parallelen, eben-flachen oder nach innen oder außen hin gegenüber den Ringflächen um 0,1 bis 0,2 mm abfallenden Plateauflächen (161, 261) aufweist, welche zur Ring-Achse (Ar) des jeweiligen Teilringes (1, 2) hin jeweils eine von den Plateauflächen (161, 261) - zur genannten Ring-Achse (Ar) parallel ausgerichtet - ausgehende und zu dieser Ring-Achse (Ar) hin - jeweils parallel zur oberen und zur unteren Ringfläche (11, 12) - auslaufende, im wesentlichen viertelkreis-förmigen Querschnitts-Verlauf aufweisende Innenflanken-Einbuchtung (14, 24) aufweisen, wobei der Radius (rv) der Viertelkreis-Innenflanken-Einbuchtung (14, 24) um 1 bis 10%, vorzugsweise um 2 bis 5%, größer ist, als der AußenRadius (rs) des Kreis-Querschnitts der durch die Viertelkreis-Innenflanken - Einbuchtungen (14, 24) der beiden gemeinsam den Kolbenring (100) bildenden Teilringe (1, 2) gebildeten, im wesentlichen halbkreisförmigen, Querschnitt aufweisenden, gemeinsamen Innenflanken-Einbuchtung (1424) angeordneten Ring- oder Schlauchfeder (3).

2. Kolbenring nach Anspruch 1, **dadurch gekennzeichnet, dass** jede der beiden Innenflanken-Einbuchtungen (14, 24) der Erhebungen (16, 26) der beiden Teilringe (1, 2 ) in ihrem mittleren Abschnitt einen im Querschnitt geradlinigen, im wesentlichen sehnenartigen Verlauf aufweisenden, maximal 50% der jeweiligen Querschnitts-Viertelkreis-Gesamtlänge betragenden Teilabschnitt (ga) aufweist.

3. Kolbenring nach Anspruch 1 oder 2, **dadurch gekennzeichnet, dass** der obere Teilring (1) an bzw. im Nahbereich seiner oberen Ringfläche (11) einen radial nach außen (A) ragenden, peripher umlaufenden Vorsprung (13) mit einer zwischen zwei ebenfalls umlaufenden Vorsprungkanten (131, 133) angeordneten, nach oben hin gerichteten Schrägfläche (132) und einer zur Ringfläche (11) parallel verlaufenden, zur Außenflanke (10) des Teilringes (1) zurückkehrenden unterseitigen Flankenfläche aufweist.

4. Kolbenring nach einem der Ansprüche 1 bis 3, **dadurch gekennzeichnet, dass** der untere Teilring (2) einen an seiner unteren Ringfläche (21) beginnenden, radial nach außen ragenden, peripher umlaufenden Vorsprung (23) mit einer zwischen zwei ebenfalls umlaufenden Vorsprungskanten (231, 233) angeordneter, ebenfalls nach oben hin gerichteten Schrägfläche (232) und einer zur Außenflanke (20) des Teilrings (2) zurückkehrenden oberseitigen Flankenfläche aufweist.

5. Kolbenring nach einem der Ansprüche 1 bis 4, **dadurch gekennzeichnet, dass** jede der Schrägflächen (132, 232) der peripher umlaufenden Vorsprünge (13, 23) der beiden Teilringe (1, 2) einen bevorzugt gleich großen Winkel (α) zur oberen (11) und zur unteren Ringfläche (21) von 40 bis 50° aufweist.

6. Kolbenring nach einem der Ansprüche 1 bis 5, **dadurch gekennzeichnet, dass** die beiden Teilringe (1, 2) im Betriebszustand mit den Plateauflächen (161, 261) ihrer Erhebungen (16, 26) auf den beiden einander zugekehrten Innenflächen (12, 22) der beiden Teilringe (1, 2) flächig aneinander liegen.

7. Kolbenring nach einem der Ansprüche 1 bis 5, **dadurch gekennzeichnet, dass** die beiden Teilringe (1, 2) im Betriebszustand mittels der dieselben radial nach außen drängenden Schlauchfeder (3) in geringem Abstand, insbesondere von 0,1 bis 0,2 mm, voneinander beabstandet gehalten sind.

8. Kolbenring nach einem der Ansprüche 1 bis 7, **dadurch gekennzeichnet, dass** die Schlauchfeder (3) auf den beiden Seiten ihrer Öffnung bzw. Stoßstelle (35) engere Spiralen oder eine größere Windungsanzahl aufweist als im übrigen Bereich.

9. Kolbenring nach einem der Ansprüche 1 bis 8, **dadurch gekennzeichnet. dass** die Erhebungen (16, 26) in Draufsicht im wesentlichen Trapezform aufweisen, wobei die kurzen Trapez-Parallelseiten der letztlich radiale Durchlässe darstellenden entsprechende Gegen-Trapezform aufweisenden Vertiefungen (17, 27) zwischen den Erhebungen (16, 26) nach innen (i) zu der Ringachse (Ar) hin und deren lange Trapez-Parallelseiten nach außen (A) zur Peripherie hin gerichtet sind.

10. Kolbenring nach einem der Ansprüche 1 bis 9, **dadurch gekennzeichnet, dass** die Erhebungen (16, 26) und die zwischen denselben angeordneten Vertiefungen (17, 27) auf den einander zugekehrten Flächen (12, 22) der Teilringe (1, 2) in Draufsicht mit jeweils untereinander gleicher Trapezform ausgebildet sind, wobei jedoch die Trapeze der Erhebungen (16, 26) längere Parallelseiten und somit größere Flächenausdehnung aufweisen als die zwischen denselben angeordneten Vertiefungen (17, 27).
